# EUROPEAN PATENT APPLICATION

(11) **EP 2 693 306 A1**
(43) Date of publication of application: **05.02.2014**
(21) Application number: 13159156.2
(22) Date of filing: 14.03.2013
(51) Int. Cl.: G06F 3/0354

(54) **Apparatus and method to determine an angle of inclination and/or rotation of a stylus**

(30) Priority: 31.07.2012 EP 12178635
(71) Applicant: BlackBerry Limited, Waterloo, ON N2K 0A7 (CA)
(72) Inventor: Idzik, Jacek S., Waterloo Ontario N2L 3W8 (CA); Nandakumar, Rohan Michael, Waterloo Ontario N2L 3W8 (CA); Mercea, Cornel, Waterloo Ontario N2L 3W8 (CA)
(74) Representative: Noble, Nicholas

(57) **Abstract**

An electronic device has a control circuit that receives first location-determination information from such a stylus as per a first location modality along with second location-determination information as per a second location modality, wherein the second location modality is different from the first location modality. This control circuit then uses the first location-determination information in combination with the second location-determination information to determine at least one of an angle of inclination of the stylus with respect to the aforementioned scribing surface and rotation of the stylus about a central longitudinal axis.

## Description

### Field of Technology

The present disclosure relates to non-passive styli and to surfaces configured to receive input via non-passive stylus.

### Background

Many electronic devices, including portable electronic devices such as but not limited to so-called smartphones and tablet/pad-styled devices, are configured to receive user input, at least in part, via a surface such as a display. A touch-sensitive display, for example, provides a way for a user to tap or swipe the display surface with a finger in order to express selections, input information, and so forth.

Many devices are configured to work specifically with a hand-held stylus in these same regards (either in lieu of the foregoing or in combination therewith). Some displays, for example, include a plurality of light-emitting transmitter/receiver pairs disposed along the sides of the display. By determining where a stylus breaks one of the corresponding light beams the device can determine a present location of the stylus and utilize that location information accordingly. Such an approach represents a passive location modality in that the behavior of the stylus as regards imparting location-determination information or otherwise participating in the location-determining process is passive.

In some instances the stylus comprises a non-passive stylus. In some cases this means the stylus includes one or more electrically-powered components that serve to interact with the display in a way that facilitates the display determining, for example, a point of contact between the stylus and the display. In general, a non-passive location modality pertains to stylus behavior that is other than a merely passive presence. There are also a considerable number of non-passive location modalities presently known with more likely to become available.

While suitable for at least some purposes, known approaches do not necessarily support all desired modes of input expression that stylus manipulation might seem to offer. The applicants have determined, for example, that few if any prior art approaches well support a variety of uniquely stylus-based gestures such as tilting the stylus or rotating the stylus about its central axis.

### Brief Description of the Drawings

FIG. 1 is a perspective schematic view in accordance with the disclosure.

FIG. 2 is a block diagram in accordance with the disclosure.

FIG. 3 is a block diagram in accordance with the disclosure.

FIG. 4 is a flow diagram in accordance with the disclosure.

FIG. 5 is a side elevational schematic view in accordance with the disclosure.

### Detailed Description

The following describes an apparatus and method pertaining to a stylus configured for interactive use with a surface such as but not limited to a display. The stylus includes a stylus housing that supports a control circuit. The control circuit is configured to selectively effect at least two different non-passive location modalities wherein each of the non-passive location modalities imparts location-determination information.

As used herein, the expression "location modality" will be understood to refer to a particular technology and approach to determining the location of a stylus with respect to a corresponding surface. Accordingly, different location modalities will be understood to refer to different ways of determining the location of the stylus rather than, for example, merely different ways of communicating the same location-determining information. Accordingly, the foregoing non-passive location modalities differ from one another in kind and not merely by degree. By way of illustration and without intending any limitations in these regards, a first non-passive location modality can comprise, say, a capacitively-based non-passive location modality while a second non-passive location modality can comprise an acoustically-based non-passive location modality.

Also described is the electronic device that works in conjunction with such a stylus. This electronic device has a control circuit that receives first location-determination information from such a stylus as per a first location modality along with second location-determination information as per a second location modality, wherein the second location modality is different from the first location modality. This control circuit then uses the first location-determination information in combination with the second location-determination information to determine at least one of an angle of inclination of the stylus with respect to the aforementioned scribing surface and rotation of the stylus about a central longitudinal axis.

Such a determination can serve, for example, to ascertain whether the stylus is tilted, and if so by what degree and in what direction relative to the scribing surface. That information, in turn, can be used in any of a variety of ways. As one example, such a stylus-based gesture can serve to increase or decrease a given operating parameter of a given application such as, but not limited to, a volume setting, a brightness setting, a contrast setting, a channel setting, a scrolling instruction, a line thickness setting, a color selection, and so forth, to note but a few illustrative examples in these regards.

These teachings are highly scalable and can be readily employed in conjunction with a variety of differently-sized and differently-purposed styli, surfaces, and non-passive location modalities. These teachings can also be used with a wide variety of different applications, either to provide a different modality by which existing user settings can be made or to offer an opportunity to interact with an application in ways not previously envisioned or accommodated.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

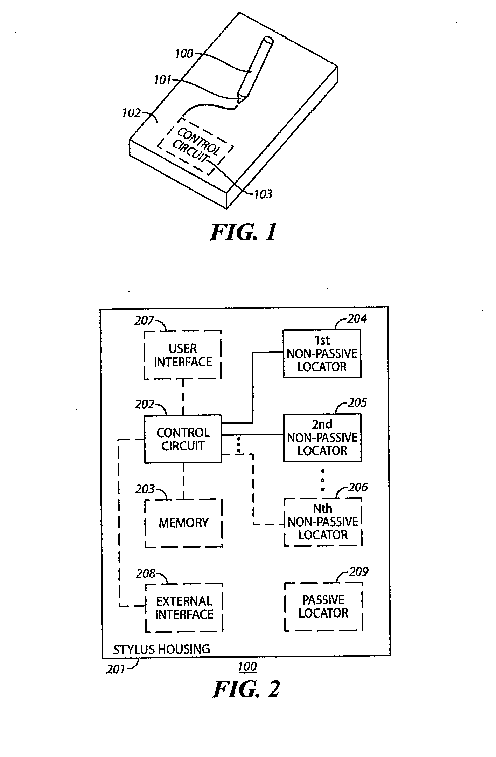

FIG. 1 presents a stylus 100. Generally speaking, a stylus is typically a hand-held utensil that often (but not exclusively) has a pencil-like elongated form factor and that includes at least one pointed end (i.e., a writing tip 101) configured to interact with a corresponding scribing surface 102. Using a stylus as an input mechanism with a display offers a variety of advantages over a fingertip including the opportunity for increased precision as well as an expression modality that accords with the user's own past experience with a pencil or pen.

The scribing surface 102 can vary from one application setting to another. For the sake of illustration but without intending any limitations in these regards, it will be presumed here that the scribing surface 102 comprises a display as well. In this case, then, interactions between the stylus 100 and the scribing surface 102 can result, for example, in a selection of particular displayed actions, in the presentation of an electronic ink line, and so forth as desired. These various ways in which a stylus's interaction with a scribing surface can be leveraged and utilized comprises a well-understood area of prior art endeavor. As the present teachings are not particularly sensitive to any particular selections in these regards, further elaboration here will not be presented for the sake of brevity.

Generally speaking, in a typical application setting, the scribing surface 102 will include a control circuit 103 that works in cooperation with one or more location-determination systems/components (not shown in this figure) to determine a present location (and/or orientation) of the stylus 100 with respect to the scribing surface 102. So configured, the control circuit 103 is configured to use location information from these location-determining modalities to determine a relative position of at least a portion of the stylus 100 with respect to the surface 102. These capabilities can be leveraged in other ways as well, with further details in these regards presented below.

FIG. 2 presents an illustrative depiction of the stylus 100. The stylus 100 includes a stylus housing 201. The stylus housing 201 will typically have a form factor suitable to accommodate hand-held use and manipulation per the intended and expected use and functionality of the tool. That said, this housing 201 can vary to some extent in size and shape and can be comprised of any of a variety of materials as best suit a given application setting (and, in some cases, a selection of particular non-passive location modalities to support).

The stylus housing 201 supports a number of components. These components may, in some cases, be integrated into a singular "component" or may comprise a plurality of physically discrete elements as desired.

A control circuit 202 can comprise a fixed-purpose hard-wired platform or can comprise a partially or wholly-programmable platform. These architectural options are well known and understood in the art and require no further description here.

By one approach this control circuit 202 can include (or can otherwise be coupled to) a memory 203. This memory 203 can serve, for example, to non-transitorily store the computer instructions that, when executed by the control circuit 202, cause the control circuit 202 to behave as described herein. (As used herein, this reference to "non-transitorily" will be understood to refer to a non-ephemeral state for the stored contents (and hence excludes when the stored contents merely constitute signals or waves) rather than volatility of the storage media itself and hence includes both non-volatile memory (such as read-only memory (ROM) as well as volatile memory (such as an erasable programmable read-only memory (EPROM).)

This control circuit 202 is configured to selectively effect at least two different non-passive location modalities where each of the non-passive location modalities imparts location-detelmination information with respect to the aforementioned scribing surface 102. To support this capability the control circuit 202 operably couples to both a first and a second non-passive locator 204 and 205. (These teachings will in fact accommodate a greater number of non-passive locators as illustrated by optional inclusion of an Nth non-passive locator 206, where "N" is any integer greater than 3.)

These non-passive locators will typically vary from one another as suits the specific requirements of the corresponding location modality. In some cases, for example, the non-passive locator may include one or more transmitters of a particular kind of energy while in other cases the non-passive locator may include one more receivers.

Generally speaking, these teachings will support any of a wide variety of possibilities in these regards. Supported non-passive location modalities (and their corresponding non-passive locators) include, but are certainly not limited to:
a capacitively-based non-passive location modality;
an acoustically-based non-passive location modality;
a magnetically-based non-passive location modality;
a light-emitting-based non-passive location modality; and
a radio-frequency-based non-passive location modality.
Specific examples in all of these regards abound in the prior art. The so-called EPOS^{™} system, for example, is an acoustically-based non-passive location modality while the N-Trig^{™} approach is an example of a capacitively-based non-passive location modality.

By one approach, at least two such non-passive location modalities may be "on" simultaneously and essentially all the time. In such a case the surface control circuit 103 could, for example, use both modalities to determine the present location of the stylus 100 or could use whichever of the two approaches best suits the needs or circumstances of a given moment.

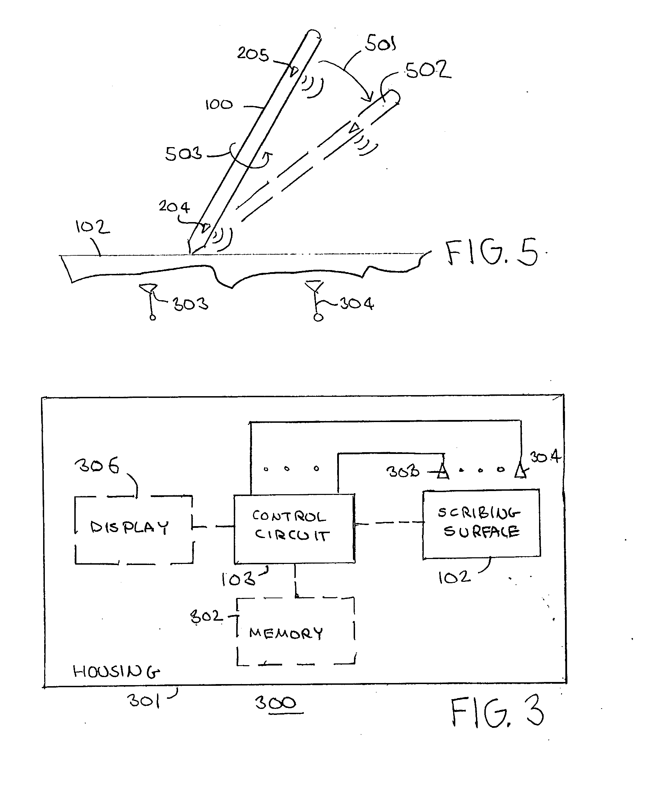

FIG. 3 presents a more-detailed presentation of the electronic device 300 that works in combination with the above-described stylus 100. By one approach, the electronic device's control circuit 103 can operably couple to an optional memory 302. As with the above-described stylus 100, this memory 302 can store, for example, programming instructions to be executed by the control circuit 103 and/or other information to help facilitate the general and specific functionality of the electronic device 300. Such specific functionality can include, for example, one or more applications (such as, without intending any limitations in these regards, email applications, word processing applications, drawing applications, graphic image editing applications, calendar applications, and so forth).

As illustrated, and as averred to above, the control circuit 103 operably couples to each of a plurality of wireless receivers 303, 304. Each such receiver 303, 304 is configured to compatibly receive location-determination information via a particular carrier modality that corresponds to a particular stylus location modality. For example, when the corresponding stylus location modality comprises an acoustically-based non-passive location modality, the corresponding wireless receiver is configured to compatibly receive the corresponding location-determination information via an acoustically-based carrier modality. Similarly, when the corresponding stylus location modality comprises a light-emitting-based non-passive location modality, the corresponding wireless receiver is configured to compatibly receive the corresponding location-determination information via a light-based carrier modality.

So configured, the control circuit 103 can receive location-determination information from the stylus 100 via various ones of the location modalities supported by the stylus 100. By one approach, the stylus 100 and electronic device 300 can continuously use (when operating) the same combination of location modalities. By another approach, if desired, these components can switch from one combination of location modalities to another. Such switching can occur per a prearranged schedule, if desired, or can be managed in real-time (for example, under the direction of one of the participating components).

As noted above, in many cases the scribing surface 102 will itself also comprise a display. If desired, however, the electronic device 300 may lack a display. Or, as another alternative, the display 306 may be separate and apart from the scribing surface 102 as desired. Generally speaking the present teachings can readily accommodate any such design choices in these regards.

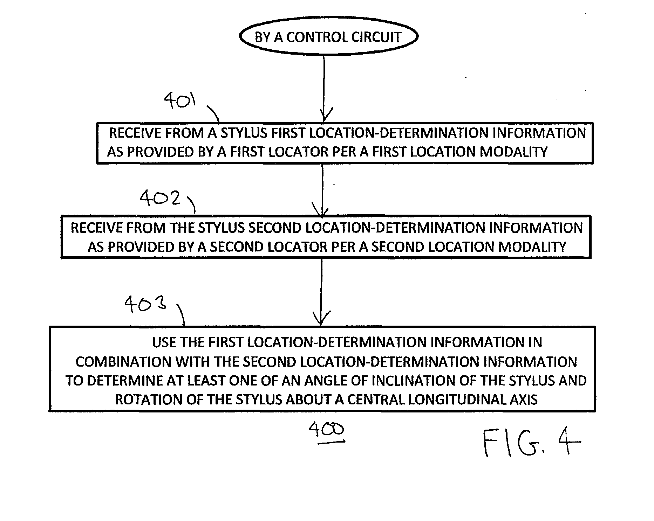

So configured, such a control circuit 103 can be configured (for example, by way of programming as will be well understood by those skilled in the art) to carry out the process 400 shown in FIG. 4. Pursuant to this process 400 (and referring as well to FIG. 5), at 401 the control circuit 103 receives first location-determination information from the stylus 100 as provided by a first locator 204 per a first location modality and as received by a corresponding wireless receiver 303. At 402, the control circuit 103 also receives second location-determination information from the same stylus 100 as provided by a second locator 205 per a second location modality (that is different from the first location modality) and as received by a corresponding wireless receiver 304.

At 403 the control circuit 103 then uses the foregoing received information in combination to determine at least one of an angle of inclination of the stylus 100 (i.e., an angle of the stylus 100 with respect to the scribing surface 102) and/or rotation of the stylus 100 about a central longitudinal axis. In particular, by placing the enabling locators 204 and 205 at different locations of the stylus 100, the location information gleaned by the control circuit 103 can be used to not only determine the location of the writing tip of the stylus but also the tilt and/or rotation thereof using basic triangulation techniques or the like.

By way of illustration, and as shown in FIG. 5, such information can serve to indicate when the stylus 100 tilts (as indicated by reference numeral 502) from an initial angle of inclination to a new position having a different angle of inclination (as denoted by reference numeral 502). Similarly, such information can serve to indicate when the user rotates the stylus 100 (as represented by the curved arrow 503) as well as the direction, speed, and duration of such rotation.

Such tilt and rotation information, in turn, can be used by the control circuit 103 in any of a variety of ways as yet another user input. As one simple example, rotating the stylus 100 clockwise while hovering above a given image can cause the image to enlarge by some amount proportional to the amount of rotation while rotating the stylus 100 counter-clockwise can impose the contrary effect.

As another simple example, placing the stylus 100 down in a certain portion of a game display can cause the stylus's tilting to be interpreted as the movements of a so-called stick control surface for an airplane. Or, more simply, the thickness of a scribed electronic line can be varied as a function of the amount of tilt that the user imparts to the stylus 100, thus providing a considerable opportunity for artistic expression.

As yet another simple example in these regards, information regarding stylus tilt can help to minimize parallax errors that can occur due to the inevitable gap (typically between 1.0 to 1.5 mm in size) between a display's point of contact with a stylus and the displayed image itself. In particular, rendered electronic ink can be displayed along the axis of the stylus 100 rather than exactly where the stylus tip is reported to accommodate at least to some extent such a parallax error.

And as yet another example in these regards, the control circuit 103 can use such tilt information (including the angle of the tilt as well as the relative direction/orientation of the stylus 100) to determine the nature and location of a rendered shadow for the stylus 100 to present on the display (presuming a particular light-source directionality). So configured, the angle of the rendered shadow can shift in correspondence to when the user changes the angle of inclination of the stylus 100.

So configured, the number of possible interactions between a stylus and a corresponding display can be significantly increased beyond today's typical expectations in these regards. Furthermore, these interactions can be considerably more nuanced and subtle than would ordinarily be expected.

The present disclosure may be embodied in other specific forms without departing from its essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. A method comprising:
by a control circuit (103):
receiving (401) from a stylus (100) first location-determination information as provided by a first locator (204) per a first location modality;
receiving (402) from the stylus second location-determination information as provided by a second locator (205) per a second location modality, the second location modality being different from the first location modality;
using (403) the first location-determination information in combination with the second location-determination information to determine at least one of an angle of inclination of the stylus and rotation of the stylus about a central longitudinal axis.

2. The method of claim 1 wherein receiving the first location-determination information from the stylus comprises wirelessly receiving the first location-determination information from the stylus, and receiving the second location-determination information from the stylus comprises wirelessly receiving the second location-determination information from the stylus.

3. The method of claim 1 wherein at least one of the first location modality and the second location modality comprises a non-passive location modality.

4. The method of claim 1 wherein the first location modality and the second location modality both comprise a non-passive location modality.

5. The method of claim 1 wherein receiving from a stylus first location-determination information as provided by a first locator per a first location modality comprises receiving the first location-determination information via a first carrier modality that corresponds to the first location modality.

6. The method of claim 5 wherein receiving from a stylus second location-determination information as provided by a second locator per a second location modality comprises receiving the second location-determination information via a second carrier modality that corresponds to the second location modality, such that the first carrier modality is different from the second carrier modality.

7. An apparatus comprising:
a scribing surface (102);
a control circuit (103) operably coupled to the scribing surface and configured to:
- receive (401) from a stylus (100) first location-determination information as per a first location modality;
- receive (402) from the stylus second location-determination information as per a second location modality, the second location modality being different from the first location modality;
- use (403) the first location-determination information in combination with the second location-determination information to determine at least one of an angle of inclination of the stylus with respect to the scribing surface and rotation of the stylus about a central longitudinal axis.

8. The apparatus of claim 7 wherein the control circuit is configured to use the first location-determination information in combination with the second location-determination information to determine both the angle of inclination of the stylus with respect to the scribing surface and rotation of the stylus about a central longitudinal axis.

9. The apparatus of claim 7 further comprising:
a first wireless receiver (303) operably coupled to the control circuit and configured to receive the first location-determination information from the stylus; and
a second wireless receiver (304) operably coupled to the control circuit and configured to receive the second location-determination information from the stylus.

10. The apparatus of claim 9 wherein the first wireless receiver is configured to compatibly receive the first location-determination information via a first carrier modality that corresponds to the first location modality.

11. The apparatus of claim 10 wherein the second wireless receiver is configured to receive the second location-determination information via a second carrier modality that corresponds to the second location modality, such that the first carrier modality is different from the second carrier modality.

12. The apparatus of claim 7 wherein at least one of the first location modality and the second location modality comprises a non-passive location modality.

13. The apparatus of claim 7 wherein the first location modality and the second location modality both comprise a non-passive location modality.
